# EUROPEAN PATENT APPLICATION

(11) **EP 4 261 698 A1**
(43) Date of publication of application: **18.10.2023**
(21) Application number: 21922591.9
(22) Date of filing: 16.12.2021
(51) Int. Cl.: G06F 13/20

(54) **CONNECTION CONTROL METHOD AND DEVICE**

(30) Priority: 29.01.2021 CN 202110124023
(71) Applicant: Huawei Digital Power Technologies Co., Ltd., Shenzhen, Guangdong 518129 (CN)
(72) Inventor: GONG, Chen, Shenzhen, Guangdong 518129 (CN); CHEN, Yu, Shenzhen, Guangdong 518129 (CN); MA, Lihou, Shenzhen, Guangdong 518129 (CN); SUO, Andajie, Shenzhen, Guangdong 518129 (CN)
(74) Representative: MERH-IP Matias Erny Reichl Hoffmann Patentanwälte PartG mbB
(86) International application number: PCT/CN2021/138734
(87) International publication number: WO 2022/161001

(57) **Abstract**

This application discloses a connection control method for an OTG (On-The-Go) device. A first device obtains content of a second device from the second device. After receiving response information of the second device, the first device obtains description information that is included in the response information and that is related to a connection status of the second device. If the description information indicates that the second device is in a disconnected state, the first device reconnects to the second device in a manner of resetting (reset) or powering off and then powering on an interface. In this implementation, in a process of obtaining the content of the second device, the first device can obtain the connection status of the second device by using the response information from the second device, and does not need to continuously perform a detection operation. In addition, when determining that the second device is disconnected, the first device can reconnect to the second device in the manner of resetting or powering off and then powering on the interface, and a user does not need to manually connect to the second device.

## Description

This application claims priority to Chinese Patent Application No. 202110124023.3, filed with the China National Intellectual Property Administration on January 29, 2021 and entitled "CONNECTION CONTROL METHOD AND DEVICE", which is incorporated herein by reference in its entirety.

### TECHNICAL FIELD

This application relates to the field of communication technologies, and in particular, to a connection control method and an OTG (On-The-Go) device.

### BACKGROUND

An OTG technology is a communication technology in which a host device and a slave device exchange data based on a universal serial bus (universal serial bus, USB) communication protocol. The host device and the slave device may be connected and communicate with each other through an OTG adapting device. However, because the OTG adapting device cannot actively report removal information of the slave device, the host device cannot sense a connection status of the slave device.

### SUMMARY

Embodiments of this application provide a connection control method and an OTG device, to resolve a problem that a host device cannot sense a connection status of a slave device because an OTG adapting device cannot report removal information of the slave device.

According to a first aspect, an embodiment of this application provides a connection control method, including: A first device sends a service instruction to a second device; the first device receives response information from the second device, where the response information includes description information related to a connection status of the second device; and if the description information indicates that the connection status of the second device is a disconnected state, the first device performs a reconnection operation on the second device.

The first device and the second device are OTG devices, and the first device may be connected to the second device by using an OTG adapting device. The first device is, for example, a host device, and the second device is, for example, a slave device. The first device may send the service instruction to the second device by using the OTG adapting device, where the service instruction is used to instruct to obtain content of the second device. The response information in this embodiment of this application is feedback information related to the service instruction. It can be learned that, in the implementation of this embodiment of this application, in a process of obtaining the content of the second device, the first device can obtain the connection status of the second device by using the response information from the second device, so that a detection operation does not need to be continuously performed, and power consumption of the first device can be reduced. In addition, when determining that the second device is disconnected, the first device can reconnect to the second device, and a user does not need to manually connect to the second device.

In a possible design, that the first device performs a reconnection operation on the second device includes: The first device performs a power-off operation on an interface between the first device and the OTG adapting device; and after preset duration, the first device performs a power-on operation on the interface between the first device and the OTG adapting device. In this implementation, when determining that the second device is in the disconnected state, the first device directly performs the power-off operation and the power-on operation on the interface between the first device and the OTG adapting device to simulate a manual reconnection operation of the user on the second device, and no manual operation of the user is required.

In a possible design, that the first device performs a reconnection operation on the second device includes: The first device performs a reset operation on the second device. In this implementation, when determining that the second device is disconnected, the first device reconnects to the second device through resetting, and the user does not need to manually connect to the second device.

In a possible design, that the first device performs a reconnection operation on the second device includes: The first device determines whether a reset operation has been performed on the second device; and if the first device has performed the reset operation on the second device, the first device performs a power-off operation on an interface between the first device and the OTG adapting device, and after preset duration, the first device performs a power-on operation on the interface between the first device and the OTG adapting device; or if the first device has not performed the reset operation on the second device, the first device performs the reset operation on the second device, and after resetting is completed, the first device sends the service instruction to the second device again. In this implementation, after determining, for the first time, that the second device is disconnected, the first device may reset the second device, and then access the second device again. In this way, it can be ensured that the second device is reconnected when the second device is disconnected due to some reasons (for example, electrostatic interference or poor contact in some environments). If it is determined that the connection of the second device is not restored through resetting, the first device can perform the power-off operation and the power-on operation on the interface between the first device and the OTG adapting device to simulate a manual reconnection operation of the user on the second device, and no manual operation of the user is required.

In a possible design, the description information is represented by a code sense (code sense) field in the response information.

In a possible design, that the first device performs a reset operation on the second device includes: The first device performs a reset operation on a setting item associated with the disconnected state of the second device. In a reset procedure, the first device may skip a setting item unrelated to disconnection of the second device, and perform a reset operation on a setting item related to disconnection of the second device. In this way, a reset speed can be increased, and power consumption of the first device can be reduced.

In a possible design, after the first device receives response information, the method further includes: The first device obtains a small computer system interface SCSI identifier of the second device from the response information; if a sequence number indicated by the SCSI identifier of the second device is greater than a maximum sequence number indicated by a SCSI identifier associated with the first device, the first device determines that the second device is an external OTG device; and the first device obtains, the description information from the response information. For example, after the first device establishes a connection to the second device, based on a SCSI communication protocol layer, the first device and the second device may separately set the SCSI identifier in sequence. For example, the first device first sets the SCSI identifier, and then the second device sets the SCSI identifier. Based on this, the first device can determine, based on the sequence number indicated by the SCSI identifier, whether the second device is an external device.

According to a second aspect, an embodiment of this application provides an electronic device. The electronic device is configured to implement functions of the first device in the foregoing method. The function may be implemented by hardware, or may be implemented by hardware executing corresponding software. The hardware or the software includes one or more modules corresponding to the foregoing function. In a possible design, a structure of the electronic device includes a processor and a transceiver. The transceiver is configured to implement receiving and sending of an instruction and information based on an interface between the electronic device and an OTG adapting device. The processor is configured to process a function of performing the foregoing connection control method by the electronic device. The electronic device may further include a memory. The memory is configured to be coupled to the processor, and the memory stores program instructions and data that are necessary for the electronic device.

According to a third aspect, an embodiment of this application provides a computer storage medium. The computer storage medium stores instructions. When the instructions are run on a computer, the computer is enabled to perform some or all steps of the connection control method in the first aspect and the possible implementations of the first aspect.

According to a fourth aspect, an embodiment of this application provides a computer program product. When the computer program product runs on a computer, the computer is enabled to perform some or all steps of the connection control method in the first aspect and the possible implementations of the first aspect.

### BRIEF DESCRIPTION OF DRAWINGS

To describe the technical solutions in this application more clearly, the following briefly describes the accompanying drawings used for describing embodiments. Apparently, a person of ordinary skill in the art may derive other drawings from these accompanying drawings without creative efforts.
FIG. 1 is a schematic diagram of an example architecture of a communication architecture 10 according to an embodiment of this application;
FIG. 2A is a schematic diagram of an example architecture of a first device 100 according to an embodiment of this application;
FIG. 2B is a schematic diagram of an example architecture of a second device 200 according to an embodiment of this application;
FIG. 2C is a schematic diagram of an example architecture of an OTG adapting device 300 according to an embodiment of this application;
FIG. 3 is a schematic flowchart of a connection control method 1000 according to an embodiment of this application;
FIG. 4 is a schematic diagram of an example architecture of a communication architecture 20 according to an embodiment of this application;
FIG. 5A is a schematic flowchart of a connection control method 2000 according to an embodiment of this application;
FIG. 5B is a schematic flowchart of a connection control method 3000 according to an embodiment of this application;
FIG. 5C is a schematic flowchart of a connection control method 4000 according to an embodiment of this application;
FIG. 6A is a schematic diagram of example composition of an electronic device 60 according to an embodiment of this application; and
FIG. 6B is a schematic diagram of an example structure of an electronic device 61 according to an embodiment of this application.

### DESCRIPTION OF EMBODIMENTS

The following describes the technical solutions in embodiments of this application with reference to the accompanying drawings in embodiments of this application.

Terms used in the following embodiments of this application are intended to describe optional implementations, but are not intended to limit this application. As used in the specification and the appended claims of this application, singular expression forms "one", "a", "the", "the above", "the", and "this" also include plural expression forms. It should also be understood that although the terms first, second, and the like may be used to describe a class of objects in the following embodiments, the objects are not limited to these terms. The terms are used to distinguish between specific objects of this class of objects. For example, in the following embodiments, terms such as first and second may be used to describe devices, but the devices should not be limited to these terms. The same applies to other classes of objects that may be described by using the terms first, second, and the like in the following embodiments, and details are not described herein again.

An embodiment of this application provides a connection control method. The connection control method is applied to a scenario in which a first device obtains content of a second device based on an OTG technology. Response information received by the first device from a second device end includes information related to a connection status of the second device. In a scenario in which the first device determines, based on the related information, that the second device end is disconnected, the first device performs a removal operation on the second device, and performs a reconnection operation or a simulated insertion and removal operation on the second device. The removal operation may include deleting buffered content of the second device, stopping a storage service of the content of the second device, and the like. In this way, the first device can sense the connection status of the second device, and can actively perform a related operation of reconnection in a scenario in which the second device is disconnected, without a need of manual insertion and removal by a user.

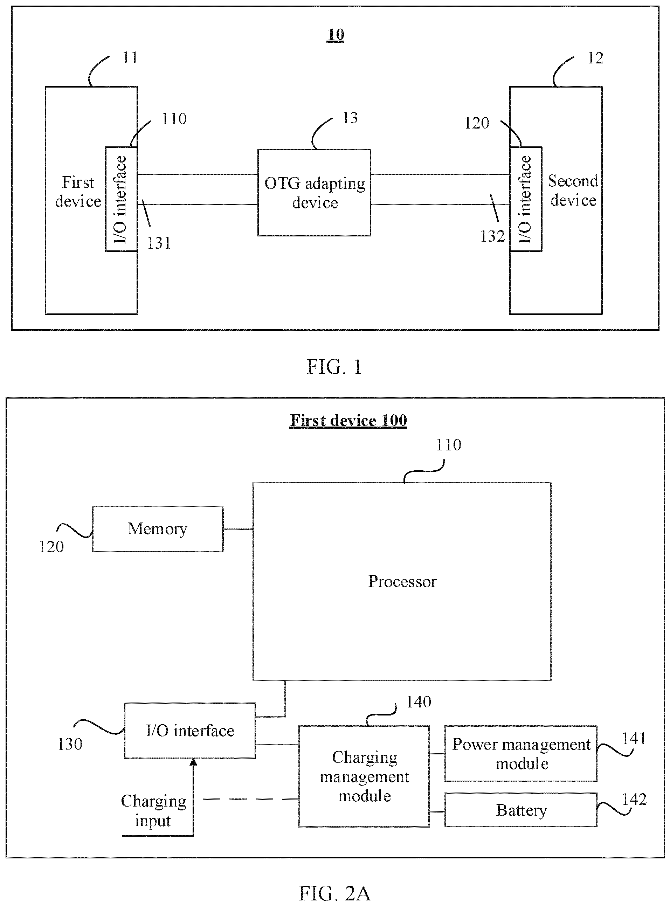

For example, FIG. 1 shows a communication architecture 10. The communication architecture 10 includes a first device 11, a second device 12, and an OTG adapting device 13. The first device 11 and the second device 12 are connected by using the OTG adapting device 13, and the first device 11 can access content of the second device 12 based on the OTG adapting device 13. As shown in FIG. 1, the first device 11 may include an input/output interface (input/output interface, I/O interface) 110, the second device 12 may include an I/O interface 120, and the OTG adapting device 13 includes an I/O interface 131 and an I/O interface 132. The I/O interface 131 of the OTG adapting device 13 is, for example, connected to the I/O interface 110, and the I/O interface 131 of the OTG adapting device 13 is, for example, connected to the I/O interface 120, so that the I/O interface 110 and the I/O interface 120 can input and output data based on a USB communication protocol. The OTG adapting device 13 may transmit data by using, for example, a small computer system interface (small computer system interface, SCSI) communication protocol.

With reference to FIG. 1, in a possible implementation, "the second device end is in a disconnected state" may mean, for example, that at least one of the I/O interface 132 of the OTG adapting device 13 and the I/O interface 120 of the second device 12 does not read data of the second device 12. In another possible implementation, "the second device end is in a disconnected state" may mean, for example, that the OTG adapting device 13 detects that the I/O interface 132 is not connected to the I/O interface 120 of the second device 12.

The first device in embodiments of this application may be an electronic device that supports an OTG function and a data processing function. For example, the first device may include but is not limited to an electronic device carrying an iOS^{®}, an Android^{®}, a Microsoft^{®}, or another operating system, for example, an electronic device such as a smartphone, a tablet computer, a camera device (camera), a monitoring device, or an in-vehicle device. The I/O interface of the first device may be a data transmission interface that can be converted into a USB interface, for example, a Type-C interface.

FIG. 2A shows a schematic diagram of an example architecture of the first device 100. The first device 100 may include a processor 110, a memory 120, an I/O interface 130, a charging management module 140, a power management module 141, a battery 142, and the like.

It may be understood that the structure shown in this application does not constitute a specific limitation on the first device 100. In some other implementations of this application, the first device 100 may include more or fewer components than those shown in the figure, or some components may be combined, or some components may be split, or different component arrangements may be used. For example, in a possible implementation, the first device 100 may further include some or all of components such as an antenna, a mobile communication module, a wireless communication module, an audio module, a speaker, a microphone, a sensor module, a camera, and a display. The foregoing components may be implemented by hardware, software, or a combination of software and hardware.

The processor 110 may include one or more processing units. For example, the processor 110 may include an application processor (application processor, AP), a modem processor, a controller, a digital signal processor (digital signal processor, DSP), a neural-network processing unit (neural-network processing unit, NPU), and the like. Different processing units may be independent components, or may be integrated into one or more processors. In some embodiments, the first device 100 may alternatively include one or more processors 110.

The controller may be a nerve center and a command center of the first device 100. The controller may generate an operation control signal based on an instruction operation code and a time sequence signal, to complete control of access instruction sending and device removal.

The memory 120 may be configured to store one or more computer programs, and the one or more computer programs include instructions. The processor 110 may run the instructions stored in the memory 120, so that the first device 100 performs the connection control method provided in some implementations of this application, processing of various instructions, and the like. The memory 120 can include a program storage area and a data storage area. The program storage area may store an operating system. The program storage area may further store one or more to-be-executed operation instructions (such as an access instruction and a resetting (reset) instruction), and the like. The data storage area may store data (for example, a SCSI identifier of the first device, content of the second device 200, and an error handle (error handle)) buffered in a process of using the first device 100.

The memory 120 may include a high-speed random access memory, and may further include a non-volatile memory, for example, at least one magnetic disk storage component, a flash memory component, or a universal flash storage (universal flash storage, UFS). In some implementations, the memory 120 may be independent of the processor 110. In some other implementations, some or all storage areas of the memory 120 are disposed in the processor 110.

The I/O interface 130 may be an interface that supports a USB standard specification, for example, may be a Type-C interface, a Mini USB interface, or a Micro USB interface. The I/O interface 130 may be connected to a first I/O interface 320 of an OTG adapting device 300, to transmit data with another device (for example, a second device 200) by using the OTG adapting device 300 based on a USB communication protocol. In some implementations, the I/O interface 130 may be further configured to connect to a charger to charge the first device 100. In a scenario of implementing an OTG function, the I/O interface 130 may be further configured to enable the first device 100 to output a voltage signal to the second device 200, and the like.

The charging management module 140 is configured to receive charging input from a charger. The charger may be a wireless charger or a wired charger. In some embodiments of wired charging, the charging management module 140 may receive charging input of a wired charger through the I/O interface 130. In some embodiments of wireless charging, the charging management module 140 may receive wireless charging input through a wireless charging coil of the first device 100. When charging the battery 142, the charging management module 140 may further supply power to the first device 100 by using the power management module 141.

The power management module 141 is configured to connect to the battery 142, the charging management module 140, and the processor 110. The power management module 141 receives input of the battery 142 and/or the charging management module 140, and supplies power to the processor 110 and the memory 120. In some implementations, the power management module 141 may further supply power to the second device 200 through the I/O interface 130. In some other implementations, the power management module 141 may alternatively be disposed in the processor 110.

The second device in embodiments of this application may be a device that supports an OTG function and a data transmission function, for example, a device such as a smartphone, a tablet computer, a camera, a printer, a remote control, a scanner, a USB flash drive, or a memory card.

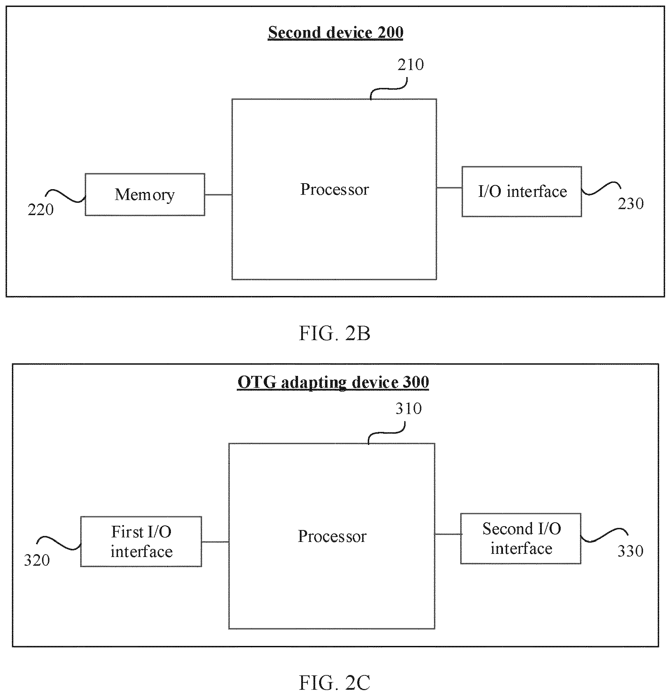

FIG. 2B shows a schematic diagram of an example architecture of the second device 200. The second device 200 may include a processor 210, a memory 220, an I/O interface 230, and the like.

It may be understood that the structure shown in this application does not constitute a specific limitation on the second device 200. In some other embodiments of this application, the second device 200 may include more or fewer components than those shown in the figure, or some components may be combined, or some components may be split, or different component arrangements may be used. The foregoing components may be implemented by hardware, software, or a combination of software and hardware.

The processor 210 may be configured to control and manage a storage service of the memory 220, for example, perform at least one of a data reading operation and a data writing operation on the memory 220 in response to an instruction received by the I/O interface 230.

The memory 220 may be configured to store information, for example, may store an image, audio, a video, a file, and the like. The memory 120 may include a high-speed random access memory, and may further include a non-volatile memory, for example, at least one magnetic disk storage component, a flash memory component, or a universal flash storage (universal flash storage, UFS).

The I/O interface 230 may be an interface that supports a USB standard specification, for example, may be a Type-C interface, a Mini USB interface, or a Micro USB interface. The I/O interface 230 may be connected to a second I/O interface 330 of the OTG adapting device 300, to transmit data with the first device 100 by using the OTG adapting device 300 based on a USB communication protocol.

The OTG adapting device in this embodiment of this application may provide an OTG function for different devices, to transmit data of the different devices. The OTG adapting device may be, for example, a card reader, a conversion adapter, or a Type-C adapter cable.

FIG. 2C shows a schematic diagram of an example architecture of the OTG adapting device 300. The OTG adapting device 300 may include a processor 310, the first I/O interface 320, and the second I/O interface 330.

It may be understood that the structure shown in this application does not constitute a specific limitation on the OTG adapting device 300. In some other embodiments of this application, the OTG adapting device 300 may include more or fewer components than those shown in the figure.

The first I/O interface 320 may be configured to connect to the I/O interface 130 of the first device 100, to receive an instruction, a voltage signal, and the like from the first device 100 through the I/O interface 130. Then, the first I/O interface 320 may transmit the instruction and the voltage signal to the processor 310, so that the processor 310 controls, in response to the instruction and the voltage signal, the OTG adapting device 300 to perform a corresponding operation. The first I/O interface 320 may be further configured to receive information from the processor 310, to transmit corresponding information to the first device 100 through the I/O interface 130. The first I/O interface 320 may be a Type-C interface, a Mini USB interface, a Micro USB interface, or the like.

The second I/O interface 330 may be configured to connect to the I/O interface 230 of the second device 200, to respond to control of the processor 310 to read content of the second device 100 through the I/O interface 230 and write content to the second device 100. The second I/O interface 330 may be further configured to feed back, to the processor 310, information representing a state of not reading information. The second I/O interface 330 may further supply power to the second device 200 through the I/O interface 230. The second I/O interface 330 may be a Type-C interface, a Mini USB interface, a Micro USB interface, or the like.

The processor 310 may be configured to receive information input through either of the first I/O interface 320 and the second I/O interface 330, to control, in response to related information, an associated interface to perform an operation. For example, the processor 310 may obtain an access instruction, a resetting instruction, or a removal instruction that is input by the first I/O interface 320, and control, in response to the related instruction, the second I/O interface 330 to perform a related operation. For another example, the processor 310 may obtain information related to an operation result of the second I/O interface 330, and then transmit feedback information associated with the related information to the first I/O interface 320, to feed back the feedback information to the first device 100.

One of the first device 100 and the second device 200 may be a host device (host), and the other device may be a slave device (slave). The host device provides a host detection function, a bus control function, and a slave device configuration function. The host device supports a session request protocol (session request protocol, SRP) and a host communication protocol (host negotiation protocol, HNP). It should be noted that, if both the first device 100 and the second device 200 support the SRP and the HNP, a host-slave relationship of the first device 100 and the second device 200 may be exchanged. For example, the first device 100 may be a host device, and the second device 200 may be a slave device; or the first device 100 may be a slave device, and the second device 200 may be a host device.

The following describes a connection control method in this embodiment of this application by using an example in which the first device (for example, the first device 100) is a host device and the second device (for example, the second device 200) is a slave device.

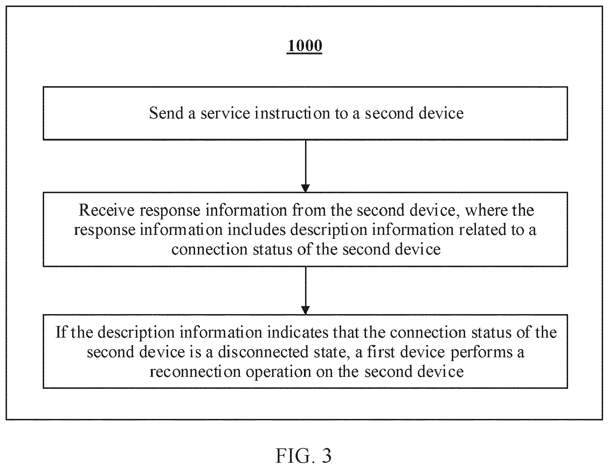

As shown in FIG. 3, an embodiment of this application provides a connection control method 1000 (method 1000 for short). The method 1000 may include: A first device sends a service instruction to a second device, and then receives response information of the service instruction, where the response information includes description information related to a connection status of the second device. If the description information indicates that the connection status of the second device is a disconnected state, the first device performs a reconnection operation on the second device.

The first device sends the service instruction to the second device by using an OTG adapting device, and receives the response information by using the OTG adapting device. The service instruction may be used to instruct the OTG adapting device to obtain content from the second device. In an optional implementation, the response information may be generated by the OTG adapting device.

For example, the description information may be represented by a field in the response information, and the field may be a field that describes an access result in the response information, for example, a code sense (code sense) field. For example, the description information may be prompt information or error information indicating that a device does not exist, for example, "Device not ready (Device not ready)" or "Medium not present (Medium not present)".

In some implementations, the first device may reconnect to the second device by performing a reset operation on the second device. In some other implementations, the first device may perform a power-off operation on an interface between the first device and the OTG adapting device, and after preset duration, perform a power-on operation on the interface between the first device and the OTG adapting device, to reconnect to the second device. In some other implementations, after determining that the second device is disconnected, the first device may further determine whether a reset operation has been performed on the second device. If the reset operation has not been performed on the second device, the first device may perform the reset operation on the second device when the second device is not connected. After the reset operation is performed, if it is determined that the second device is still in the disconnected state, a power-off operation may be performed on the interface between the first device and the OTG adapting device, and after preset duration, a power-on operation is performed on the interface between the first device and the OTG adapting device, to reconnect to the second device, to reconnect to the second device. The preset duration may be set based on a requirement, and the preset duration is, for example, 1 second.

It can be learned that, in this implementation, in a process of obtaining the content of the second device, the first device can obtain the connection status of the second device by using the response information from the second device, so that a detection operation does not need to be continuously performed, and power consumption of the first device can be reduced. In addition, the first device determines the connection status of the second device by using field content in the response information, which is not limited by an access operation procedure, and is not limited by a type of the OTG adapting device, and is widely applicable.

In a possible implementation, for example, the first device may initialize or reset, at a SCSI protocol layer, setting items at all levels related to a connection to the second device, to implement the reset operation on the second device. In some implementations, in a reset procedure, the first device may skip a setting item unrelated to disconnection of the second device, and perform a reset operation on a setting item related to disconnection of the second device. In this way, a reset speed can be increased, and power consumption of the first device can be reduced.

In actual implementation, content that the first device needs to obtain may come from a memory of the first device, or may come from the second device (that is, an external device). Based on this, in some implementations, after receiving the response information, the first device may detect whether the response information is from the second device.

After the first device establishes a connection to the second device, the first device and the second device may separately set a SCSI identifier based on a SCSI communication protocol layer. Optionally, after one device completes setting a SCSI identifier for all connection events in the device, another device sets a SCSI identifier. Therefore, different SCSI identifiers may indicate, for example, different sequence numbers. Based on this, for example, the first device may obtain the SCSI identifier from the received response information, and then determine, based on a value relationship between a sequence number indicated by a SCSI identifier included in the response information and a sequence number indicated by a SCSI identifier of the first device, whether the response information is from the second device. The SCSI identifier may be, for example, a SCSI block device number of a SCSI protocol layer.

For example, after the first device establishes the connection to the second device, the first device sets a SCSI block device number for all connection events of the first device. For example, a SCSI block device number "sda" and a SCSI block device number "sdb" are set for the first device. Then, the second device sets a SCSI block device number for all connection events of the second device, and the second device sets, for example, a SCSI block device number "sdc". Further, after the first device receives the response information, for example, obtains the SCSI block device number "sdc" from the response information, and a sequence number indicated by the SCSI block device number "sdc" is greater than a sequence number indicated by a largest SCSI block device number "sdc" in the first device, the first device may determine that the response information is from the second device.

It can be learned that, in the implementation of this embodiment of this application, in a process of obtaining the content of the second device, the first device can obtain the connection status of the second device by using the response information from the second device, so that a detection operation does not need to be continuously performed, and power consumption of the first device can be reduced. In addition, when determining that the second device is disconnected, the first device can reconnect to the second device in a manner of resetting or powering off and then powering on the interface, and a user does not need to manually connect to the second device.

The following describes an implementation process of this embodiment with reference to an example.

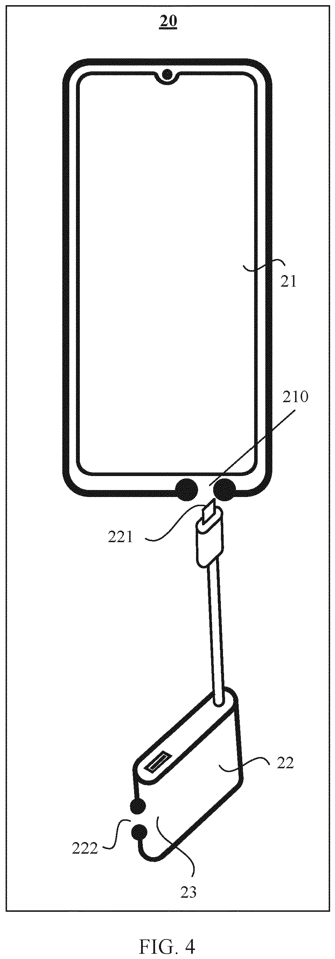

FIG. 4 shows a communication architecture 20. In the communication architecture 20, for example, a host device is a mobile phone 21 that can implement an OTG function, an OTG adapting device is a card reader 22, and a slave device is a secure digital memory card (secure digital memory card, SD card) 23. A Type-C interface 221 of the card reader 22 is connected to a Type-C interface 210 of the mobile phone 21, and a USB interface 222 of the card reader 22 is connected to a pin (not shown in FIG. 4) of the SD card 23.

It may be understood that the communication architecture 20 shown in FIG. 4 is merely an example for description, and does not constitute a limitation on the communication architecture in embodiments of this application. In some other implementations, each device may be another device that supports the OTG function. For example, the host device is a tablet computer, the slave device is a mobile phone, and the OTG adapting device is an OTG cable.

In the following example, communication signaling at a SCSI protocol layer of the mobile phone 21 and the card reader 22 is used as an example for description.

After the mobile phone 21, the card reader 22, and the SD card 23 establish a connection, a processor of the mobile phone 21 configures a SCSI identifier for the mobile phone 21, and the SCSI identifier of the mobile phone 21 is, for example, "sdc". After the mobile phone 21 configures the SCSI identifier "sdc", a processor of the SD card 23 configures a SCSI identifier for the SD card 23, and the SCSI identifier of the SD card 23 is, for example, "sdd". Then, the mobile phone 21 may perform the connection control method in embodiments of this application.

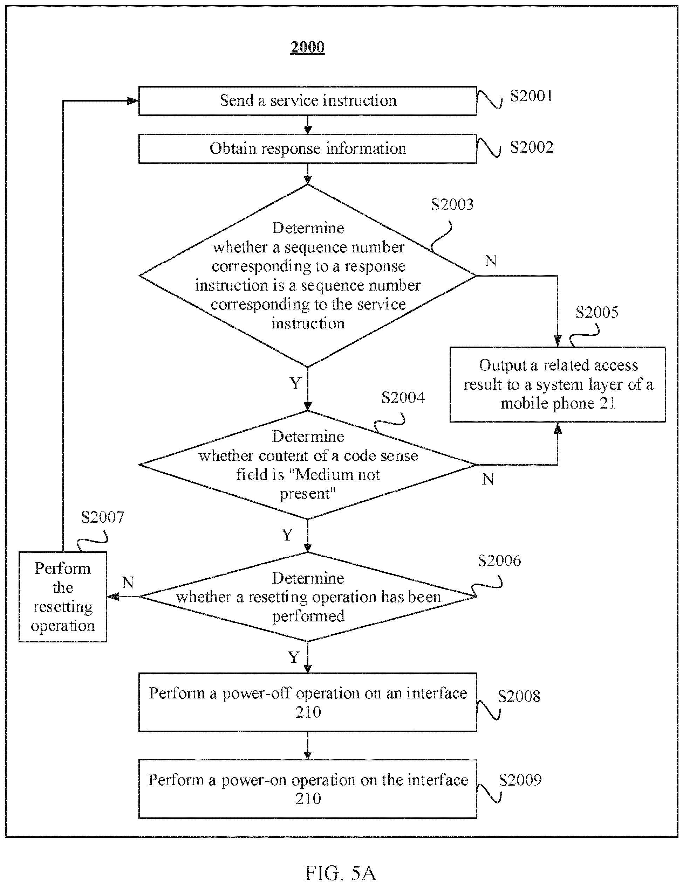

FIG. 5A shows a connection control method 2000 (method 2000 for short). The method 2000 may include: A system of a mobile phone 21 sends a service instruction to an SD card 23 (S2001), and a SCSI layer of the mobile phone 21 receives response information (S2002). Then, the SCSI layer of the mobile phone 21 may determine whether a sequence number corresponding to the response information is greater than a sequence number corresponding to the service instruction (S2003). If the sequence number corresponding to the response information is greater than the sequence number corresponding to the service instruction, whether content of a code sense (code sense) field in the response information is "Medium not present (Medium not present)" is determined (S2004). If the sequence number corresponding to the response information is less than the sequence number corresponding to the service instruction, and the content of the code sense (code sense) field in the response information is not "Medium not present (Medium not present)", the SCSI layer of the mobile phone 21 transfers a related access result in the response information to a system layer of the mobile phone 21 (S2005), so that the mobile phone 21 displays the corresponding access result. In addition, if the content of the code sense (code sense) field in the response information is "Medium not present (Medium not present)", whether a reset operation (reset) has been performed on the SD card 23 is determined (S2006). If the SD card 23 has not been reset, the SD card 23 is reset (S2007), and then step S2001 is performed again. If the SD card 23 has been reset, a power-off operation (simulating an operation of manually removing the SD card 23 by a user) is performed on the Type-C interface 210 of the mobile phone 21 (S2008), and an operation of deleting stored content in the SD card 23 is performed. Then, a power-on operation is performed on the Type-C interface 210 of the mobile phone 21 (simulating an operation of manually inserting the SD card 23 by the user) (S2009).

By using the implementation in FIG. 5A, the mobile phone 21 can obtain a connection status of the SD card 23 based on the response information of the read operation in a process of reading content of the SD card 23. In addition, after the mobile phone 21 first determines that the SD card 23 is disconnected, the mobile phone 21 may reset the SD card 23, and then access the SD card 23 again. In this way, it can be ensured that the SD card 23 is reconnected when the SD card 23 is disconnected due to some reasons (for example, electrostatic interference or poor contact in some environments). If the mobile phone 21 determines that the connection of the SD card 23 is not restored through resetting, the mobile phone 21 can simulate, by using the power-off operation and the power-on operation on the Type-C interface 210, an operation of manually inserting and removing the SD card 23 by the user, and the user does not need to manually insert and remove the SD card 23.

The service instruction involved in S2001 is, for example, a SCSI instruction SCSI cmd1. The response information involved in S2002 is, for example, SCSI cmd2, and SCSI cmd2 corresponds to, for example, the SCSI identifier "sdd". The sequence number corresponding to the service instruction may be indicated by the SCSI identifier "sdc", and the sequence number corresponding to the response information may be indicated by the SCSI identifier "sdd". In this example, an operation order of configuring the SCSI identifier "sdd" by the SD card 23 is, for example, after the SCSI identifier "sdc" is configured by the mobile phone 21, and the SCSI identifier gradually increases with, for example, a set sequence number. Therefore, if the sequence number indicated by "sdd" is greater than the sequence number indicated by "sdc", it indicates that the SD card 23 is an external device of the mobile phone 21.

SCSI cmd is a service instruction used for information exchange between OTG devices, but not an instruction used to detect whether an external OTG device is online. For example, SCSI cmd1 in the method 2000 may be a service instruction used by the mobile phone 21 to obtain the content in the SD card 23. SCSI cmd2 may be a service instruction in response to SCSI cmd1, and SCSI cmd2 may include result information of obtaining the content of the SD card 23 by the mobile phone 21. For example, SCSI cmd2 may include a content field and a code sense field, where the content field is used to carry the content of the SD card 23, and the code sense field indicates a connection status of the SD card 23. In some implementations, if the SD card 23 is in position (that is, the SD card 23 and the card reader 22 are in a connected state), the content field includes the obtained content of the SD card 23. In some other implementations, if the SD card 23 is not in position (that is, the SD card 23 is disconnected from the card reader 22), the content field may be empty, and the code sense field may include information indicating that the SD card 23 is disconnected.

For example, if content of the code sense field is "Medium not present", it indicates that the SD card 23 is not in position. In some implementations, after the card reader 22 receives SCSI cmd1, a processor of the card reader 22 may control the USB interface 222 to read the content of the SD card 23. If the USB interface 222 cannot read any content, information indicating that no content is read is transmitted to the processor of the card reader 22. The processor of the card reader 22 may generate SCSI cmd2, and content of a code sense field of SCSI cmd2 is "Medium not present".

Further, in an optional design, after determining that the content of the code sense field of SCSI cmd2 is "Medium not present", the SCSI layer of the mobile phone 21 may add SCSI cmd2 to an error handle queue by using a function scsi_eh_scmd_add(). Further, in a process in which the system of the mobile phone 21 resets the SD card 23, an associated item in the error handle queue may be reset, and an item that is normal is skipped, so that a reset speed can be increased, and power consumption of the mobile phone 21 can be reduced.

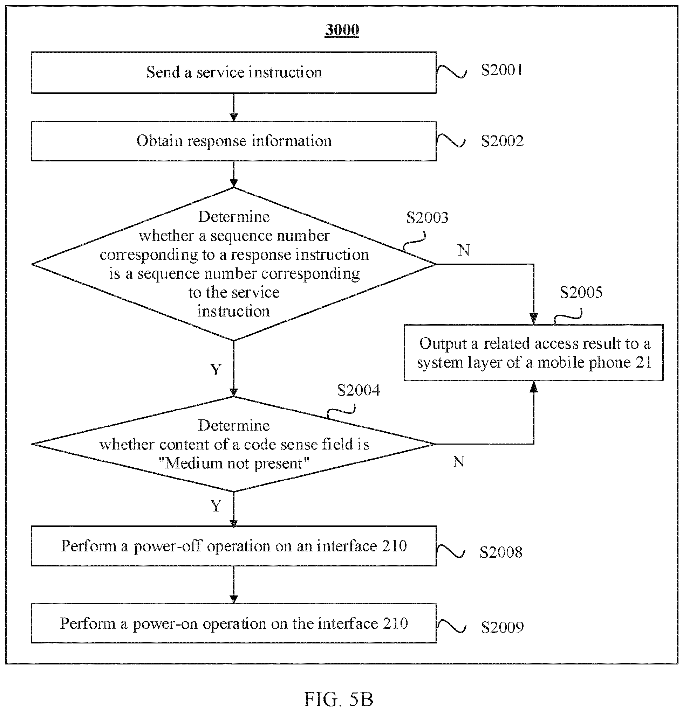

FIG. 5B shows a connection control method 3000 (method 3000 for short). The method 3000 may include: A system of a mobile phone 21 sends a service instruction to an SD card 23 (S2001), and a SCSI layer of the mobile phone 21 receives response information (S2002). Then, the SCSI layer of the mobile phone 21 may determine whether a sequence number corresponding to the response information is greater than a sequence number corresponding to the service instruction (S2003). If the sequence number corresponding to the response information is greater than the sequence number corresponding to the service instruction, whether content of a code sense field in the response information is "Medium not present" is determined (S2004). If the sequence number corresponding to the response information is less than the sequence number corresponding to the service instruction, and the content of the code sense field in the response information is not "Medium not present", the SCSI layer of the mobile phone 21 transfers a related access result in the response information to a system layer of the mobile phone 21 (S2005), so that the mobile phone 21 displays the corresponding access result. In this example, if the content of the code sense field in the response information is "Medium not present", a power-off operation (an operation of simulating manually removing the SD card 23 by a user) is performed on a Type-C interface 210 of the mobile phone 21 (S2008), and content stored in the SD card 23 is deleted. Then, a power-on operation is performed on the Type-C interface 210 of the mobile phone 21 (simulating an operation of manually inserting the SD card 23 by the user) (S2009).

For example operations of the implementation processes in FIG. 5B, refer to related descriptions in FIG. 5A. Details are not described herein again.

In the implementation shown in FIG. 5B, when determining that the SD card 23 is disconnected, the mobile phone 21 directly simulates manual insertion and removal operations of the user on the SD card 23 by using the power-off operation and the power-on operation on the Type-C interface 210, and the user does not need to manually insert and remove the SD card 23.

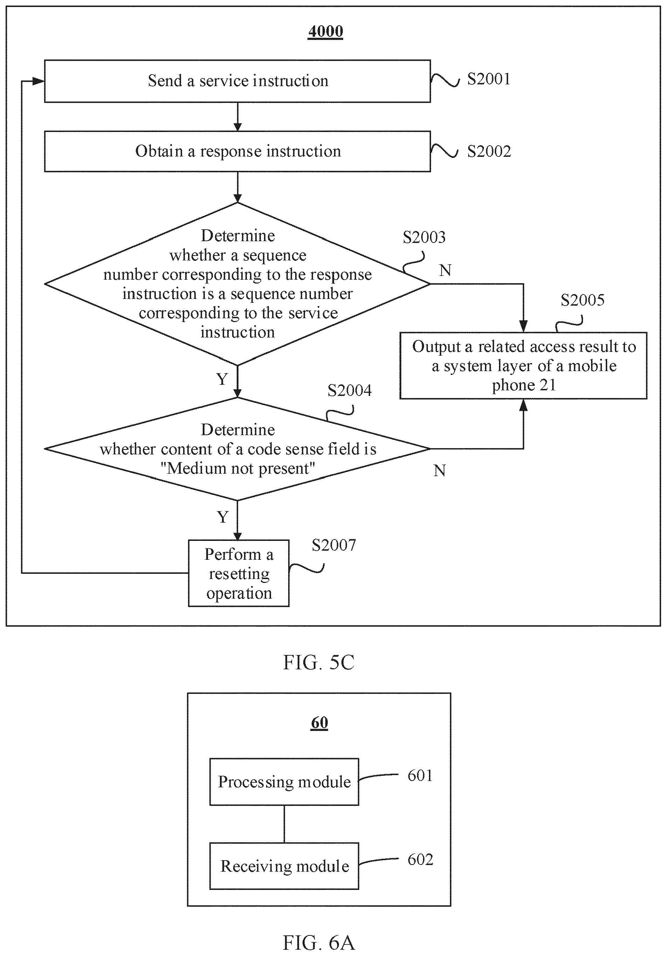

FIG. 5C shows a connection control method 4000 (method 4000 for short). The method 4000 may include: A system of a mobile phone 21 sends a service instruction to an SD card 23 (S2001), and a SCSI layer of the mobile phone 21 receives response information (S2002). Then, the SCSI layer of the mobile phone 21 may determine whether a sequence number corresponding to the response information is greater than a sequence number corresponding to the service instruction (S2003). If the sequence number corresponding to the response information is greater than the sequence number corresponding to the service instruction, whether content of a code sense field in the response information is "Medium not present" is determined (S2004). If the sequence number corresponding to the response information is less than the sequence number corresponding to the service instruction, and the content of the code sense field in the response information is not "Medium not present", the SCSI layer of the mobile phone 21 transfers a related access result in the response information to a system layer of the mobile phone 21 (S2005), so that the mobile phone 21 displays the corresponding access result. In this example, if the content of the code sense field in the response information is "Medium not present", a reset operation (reset) is performed on the SD card 23 (S2007), and then step S2001 is performed again.

For example operations of the implementation processes in FIG. 5C, refer to related descriptions in FIG. 5A. Details are not described herein again.

In the implementation shown in FIG. 5C, when determining that the SD card 23 is disconnected, the mobile phone 21 reconnects to the SD card 23 through resetting, and the user does not need to manually remove and insert the SD card 23.

It may be understood that the connection control methods shown in FIG. 5A to FIG. 5C are all examples for description, and do not constitute a limitation on embodiments of this application. In some other implementations, a communication protocol used in the connection control method may alternatively be a protocol supported by another OTG technology. The content of the code sense field may alternatively be other description information. Details are not described one by one herein. In addition, the connection control method 2000 may also be applicable to another OTG device. This is not limited herein.

In conclusion, according to the technical solutions in embodiments of this application, in a process of obtaining content of the second device, the first device can obtain the connection status of the second device by using the response information from the second device, so that a detection operation does not need to be continuously performed, and power consumption of the first device can be reduced. In addition, when determining that the second device is disconnected, the first device can reconnect to the second device in a manner of resetting or powering off and then powering on the interface, and the user does not need to manually connect to the second device.

In the foregoing embodiments, the solutions of the connection control method provided in this application are described from perspectives of a hardware structure, a software architecture, and actions performed by software and hardware of the first device. A person skilled in the art should easily be aware that, in combination with processing steps of the service instruction, response information, resetting, and the like described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

For example, the first device 100 may implement the foregoing corresponding functions in a form of function modules. As shown in FIG. 6A, an electronic device 60 may include a processing module 601 and a transceiver module 602. The electronic device 60 may be configured to perform functions of the first device in FIG. 3 and functions of the mobile phone 21 in FIG. 5A to FIG. 5C.

For example, the transceiver module 602 may be configured to: send a service instruction to a second device, and receive response information from the second device, where the response information includes description information related to a connection status of the second device. The processing module 601 may be configured to: when the description information indicates that the connection status of the second device is a disconnected state, perform a reconnection operation on the second device.

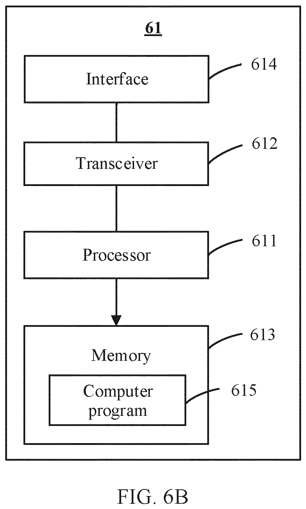

It may be understood that division of the foregoing modules is merely logical function division. During actual implementation, a function of the transceiver module may be integrated into a transceiver for implementation, and a function of the processing module may be integrated into a processor for implementation. As shown in FIG. 6B, an electronic device 61 may include a processor 611, a transceiver 612, a memory 613, and an interface 614. The memory 613 is configured to be coupled to the processor 611, and the memory 613 stores a computer program 615 necessary for the electronic device 61. The receiver 601 may receive a message and an instruction in any embodiment shown in FIG. 5A to FIG. 5C. The display 603 may be configured to display a message group in any embodiment shown in FIG. 5A to FIG. 5C. The processor 602 may be configured to perform operations other than receiving a message and an instruction and displaying a message group in any embodiment shown in FIG. 5A to FIG. 5C.

It should be understood that the electronic device 61 in this embodiment of this application may correspond to the first device shown in FIG. 2A and FIG. 3, and the mobile phone 21 shown in FIG. 4 to FIG. 6. The interface 614 is configured to connect to an OTG adapting device, and the interface 614 may be, for example, a USB interface. The transceiver 612 is configured to: send a service instruction, receive response information, and the like in any embodiment shown in FIG. 3 or FIG. 5A to FIG. 5C. The processor 611 is configured to invoke the computer program 615 to perform processing other than instruction and information receiving and sending in any embodiment shown in FIG. 3 and FIG. 5A to FIG. 5C. Details are not described herein again.

For specific content, refer to related descriptions of the electronic device in the embodiments corresponding to FIG. 3 and FIG. 5A to FIG. 5C. Details are not described herein again.

In specific implementation, corresponding to the first device, this application further provides a computer storage medium. The computer storage medium disposed in the first device may store a program. When the program is executed, some or all of the steps in the embodiments of the connection control method provided in FIG. 3 and FIG. 5A to FIG. 5C may be implemented. The storage medium in the first device may be a magnetic disk, an optical disk, a read-only memory (read-only memory, ROM), a random access memory (random access memory, RAM), or the like.

One or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on a chip) or an application-specific integrated circuit (application-specific integrated circuit, ASIC), or may be an independent semiconductor chip. In addition to the cores used to execute the software instruction to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or without software to execute the foregoing method procedure.

When the foregoing modules or units are implemented by using software, all or some of the foregoing modules or units may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk (SSD)), or the like.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments.

Embodiments in this specification are all described in a progressive manner, for same or similar parts in embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

Although some preferred embodiments of this application have been described, a person skilled in the art can make changes and modifications to these embodiments once the person learns the basic inventive concept. Therefore, the following claims are intended to be construed as to cover the preferred embodiments and all changes and modifications falling within the scope of this application.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A connection control method, comprising:
sending, by a first device, a service instruction to a second device;
receiving, by the first device, response information from the second device, wherein the response information comprises description information related to a connection status of the second device; and
if the description information indicates that the connection status of the second device is a disconnected state, performing, by the first device, a reconnection operation on the second device.

2. The method according to claim 1, wherein the performing, by the first device, a reconnection operation on the second device comprises:
performing, by the first device, a power-off operation on an interface between the first device and an OTG adapting device; and
after preset duration, performing, by the first device, a power-on operation on the interface between the first device and the OTG adapting device.

3. The method according to claim 1, wherein the performing, by the first device, a reconnection operation on the second device comprises:
performing, by the first device, a reset operation on the second device.

4. The method according to claim 1, wherein the performing, by the first device, a reconnection operation on the second device comprises:
determining, by the first device, whether a reset operation has been performed on the second device; and
if the first device has performed the reset operation on the second device, performing, by the first device, a power-off operation on an interface between the first device and an OTG adapting device, and after preset duration, performing, by the first device, a power-on operation on the interface between the first device and the OTG adapting device; or
if the first device has not performed the reset operation on the second device, performing, by the first device, the reset operation on the second device; and after resetting is completed, sending, by the first device, the service instruction to the second device again.

5. The method according to any one of claims 1 to 4, wherein
the description information is represented by a code sense code sense field in the response information.

6. The method according to claim 3 or 4, wherein the performing, by the first device, a reset operation on the second device comprises:
performing, by the first device, a reset operation on a setting item associated with the disconnected state of the second device.

7. The method according to any one of claims 1 to 6, wherein after the receiving, by the first device, response information, the method further comprises:
obtaining, by the first device, a small computer system interface SCSI identifier of the second device from the response information;
if a sequence number indicated by the SCSI identifier of the second device is greater than a maximum sequence number indicated by a SCSI identifier associated with the first device, determining, by the first device, that the second device is an external OTG device; and
obtaining, by the first device, the description information from the response information.

8. An electronic device, acting as a first device, and comprising a processor and a transceiver, wherein
the transceiver is configured to send a service instruction to a second device;
the transceiver is further configured to receive response information from the second device, wherein the response information comprises description information related to a connection status of the second device; and
the processor is configured to: when the description information indicates that the connection status of the second device is a disconnected state, perform a reconnection operation on the second device.

9. The electronic device according to claim 8, wherein
the processor is further configured to: perform a power-off operation on an interface between the first device and an OTG adapting device, and after preset duration, perform a power-on operation on the interface between the first device and the OTG adapting device.

10. The electronic device according to claim 8, wherein
the processor is further configured to perform a reset operation on the second device.

11. The electronic device according to claim 8, wherein
the processor is further configured to determine whether a reset operation has been performed on the second device;
the processor is further configured to: when the first device has performed the reset operation on the second device, perform a power-off operation on an interface between the first device and an OTG adapting device, and after preset duration, perform a power-on operation on the interface between the first device and the OTG adapting device; and
the processor is further configured to: when the first device has not performed the reset operation on the second device, perform the reset operation on the second device.

12. The electronic device according to any one of claims 8 to 11, wherein
the description information is represented by a code sense code sense field in the response information.

13. The electronic device according to claim 10 or 11, wherein
the processor is further configured to perform a reset operation on a setting item associated with the disconnected state of the second device.

14. The electronic device according to any one of claims 8 to 13, wherein
the processor is further configured to obtain a small computer system interface SCSI identifier of the second device from the response information; and
the processor is further configured to: when a sequence number indicated by the SCSI identifier of the second device is greater than a maximum sequence number indicated by a SCSI identifier associated with the first device, determine that the second device is an external OTG device, and obtain the description information from the response information.
